(19) Europäisches Patentamt
European Patent Office
Office européen des brevets

(11) Veröffentlichungsnummer : **0 461 385 B1**

(12) # EUROPÄISCHE PATENTSCHRIFT

(45) Veröffentlichungstag der Patentschrift :
**10.02.93 Patentblatt 93/06**

(51) Int. Cl.⁵ : **C02F 11/08,** C02F 9/00, C02F 1/20

(21) Anmeldenummer : **91107272.6**

(22) Anmeldetag : **04.05.91**

(54) **Verfahren zur Aufarbeitung von Abwasser aus unter erhöhtem Druck betriebenen Vergasungsanlagen.**

(30) Priorität : **08.06.90 DE 4018309**

(43) Veröffentlichungstag der Anmeldung :
**18.12.91 Patentblatt 91/51**

(45) Bekanntmachung des Hinweises auf die Patenterteilung :
**10.02.93 Patentblatt 93/06**

(84) Benannte Vertragsstaaten :
**DE DK ES NL**

(56) Entgegenhaltungen :
**EP-A- 0 352 891**
**DE-A- 3 328 989**
**DE-A- 3 714 016**
**database WPI, nr.75-36463 [22], Derwent Publications Ltd. London.**

(73) Patentinhaber : **Krupp Koppers GmbH**
**Altendorfer Strasse 120**
**W-4300 Essen 1 (DE)**

(72) Erfinder : **Firnhaber, Bernhard, Dr.**
**Pelmanstrasse 40**
**W-4300 Essen 1 (DE)**
Erfinder : **Gross, Manfred, DR.**
**Karl-Arnold-Strasse 21**
**W-4390 Gladbeck (DE)**
Erfinder : **Schmid, Karl, Dr.**
**Hohe Buchen 14a**
**W-4300 Essen 1 (DE)**

**EP 0 461 385 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Aufarbeitung des Abwassers, das bei der direkten Wasserwäsche des durch Vergasung fester, flüssiger und/oder gasförmiger Brennstoffe unter erhöhtem Druck gewonnenen Rohgases anfällt, unter Anwendung einer Oxidationsbehandlung mit Luft und/oder Sauerstoff sowie einer Filtration zur Abscheidung der im Abwasser enthaltenen Feststoffe.

Bei der Vergasung (Partialoxidation) fester, flüssiger und/oder gasförmiger Brennstoffe entsteht ein Rohgas, das neben den Hauptkomponenten CO, $H_2$, $H_2O$, $N_2$ und $CO_2$ noch eine Reihe anderer gasförmiger Komponenten enthalten kann, die aus den Begleitkomponenten des eingesetzten Brennstoffes gebildet werden, wie beispielsweise $H_2S$, $SO_2$, HCN, HCl und $NH_3$. Insbesondere bei der Vergasung fester Brennstoffe, wie beispielsweise Kohle, enthält das Rohgas außerdem auch Flugstaub, der normalerweise aus Ascheteilchen und unvergaster Brennstoffsubstanz besteht. Moderne Vergasungsanlagen werden heute vielfach unter einem erhöhten, im Bereich zwischen 25 und 100 bar liegenden Druck betrieben. Das aus der Vergasungsanlage austretende Rohgas wird nach der Abkühlung in einem Abhitzekessel meist mechanisch vorentstaubt, dann einer direkten Wasserwäsche und anschließend einer Schlußkühlung unterzogen.

In der direkten Wasserwäsche wird das Rohgas normalerweise bis auf einen Feststoffgehalt von < 1 $mg/m_n^3$ entstaubt.

Gleichzeitig nimmt das Waschwasser aus dem Rohgas auch gasförmige Komponenten auf, wie beispielsweise $CO_2$, $H_2S$, $SO_2$, $S_x$, HCN, HCl, HCOOH und $NH_3$, die je nach Konzentration im Rohgas, Gasdruck, Temperatur und $p_H$-Wert des Wassers unterschiedliche Löslichkeiten im Waschwasser auf weisen. Die gelösten Gaskomponenten reagieren teilweise im Waschwasser weiter, so daß eine Reihe von Kationen und Anionen entstehen können, die sich infolge der Kreislaufführung des Waschwassers in diesem anreichern. Daher muß ein Teilstrom des Waschwassers kontinuierlich aus dem Kreislauf der direkten Wasserwäsche ausgeschleust und durch Frischwasser ersetzt werden. Die Menge des ausgeschleusten Waschwassers, das als Abwasser aus dem Prozeß entfernt werden muß, wird dabei bestimmt durch die Differenz des Wassergehaltes von Roh- und Endgas und/oder durch die Menge der im Waschwasser enthaltenen Salze. Wegen der in ihm enthaltenen, zum Teil giftigen Verunreinigungen muß das anfallende Abwasser vor seiner Abgabe in den Vorfluter oder eine Kläranlage gereinigt werden. Eine typische Analyse eines Abwassers, das bei der direkten Wasserwäsche eines Rohgases anfällt, welches durch Flugstromvergasung von Steinkohle unter erhöhtem Druck gewonnen wurde, ist in der am Schluß aufgeführten Tabelle angegeben.

Aus der DE-A- 33 28 989 ist deshalb bereits ein Verfahren zur Aufarbeitung von Abwasser der gattungsgemäßen Art bekannt, bei dem das Abwasser zunächst in einem Klärbecken behandelt und das dabei anfallende geklärte Waschwasser in den Waschprozeß zurückgeführt wird, während das konzentrierte Schlammwasser einer Oxidationsbehandlung mit Luft und/oder Sauerstoff unterworfen wird. Das heißt, die Oxidationsbehandlung wird hier in Gegenwart des Flugstaubschlammes vorgenommen, wobei der Flugstaub eine katalytische Wirkung bei der Oxidation der Schadstoffe ausübt. In entsprechender Weise arbeitet auch ein in der DE-A- 37 14 016 beschriebenes Verfahren. In der Praxis hat sich nun jedoch gezeigt, daß diese Methode mit dem Nachteil behaftet ist, daß hierbei alle im Abwasser enthaltenen Komponenten oxidiert werden. So werden unter anderem alle schwefelhaltigen Komponenten entweder in Elementarschwefel oder in Sulfat überführt, so daß eine Gewinnung von Elementarschwefel aus Schwefelwasserstoff nach dem Claus-Prozeß verhindert wird. Das gebildete Sulfat ist zwar nicht giftig, erhöht jedoch die Salzfracht des Abwassers Bei Vorhandensein von Elementarschwefel im Abwasser besteht die Gefahr der Rhodanidbildung, durch die Ablagerungen in den Strippern verursacht werden können.

Der Erfindung liegt deshalb die Aufgabe zugrunde, das Verfahren der eingangs genannten Art dahingehend zu verbessern, daß die vorstehend beschriebenen Nachteile vermieden werden, wobei gleichzeitig ein energetisch und apparativ kostengünstiges Verfahren zur Anwendung gelangen soll.

Das der Lösung dieser Aufgabe dienende Verfahren ist erfindungsgemäß dadurch gekennzeichnet, daß die folgenden Verfahrensschritte in der angegebenen Reihenfolge angewendet werden:

a) Entspannung des anfallenden, aus dem Kreislauf der direkten Wasserwäsche abgezogenen Abwassers vom Vergasungsdruck bis auf einen Druck von 4 bis 10 bar,

b) Druckfiltration des teilentspannten Abwassers und gleichzeitige Entspannung desselben bis auf einen Druck von 1,1 bis 1,8 bar,

c) Dampfstrippung der flüchtigen sauren Komponenten des Abwassers bei einem $p_H$-Wert des Abwassers von $\leqq 7$,

d) Druckoxidation bei einem Druck von 1,5 bis 15 bar und einer Temperatur zwischen 110 und 170°C sowie einer Verweilzeit des Abwassers im Reaktor von 2 bis 8 Stunden

und

e) Dampfstrippung des im Abwasser vorhandenen Ammoniaks bei einem $p_H$-Wert des Abwassers von ≧ 9.

Beim erfindungsgemäßen Verfahren wird die Reinigung des anfallenden Abwassers also in mehreren hintereinander geschalteten Verfahrensstufen durchgeführt. Die Integration dieser Stufen führt hierbei zu einem wenig aufwendigen Gesamtverfahren, dessen wesentliches Merkmal darin zu sehen ist, daß die Druckoxidation des Abwassers erst dann erfolgt, nachdem der in ihm enthaltene Flugstaub durch Druckfiltration abgeschieden worden ist.

Weitere Einzelheiten des erfindungsgemäßen Verfahrens ergeben sich aus den vorliegenden Unteransprüchen und sollen nachfolgend an Hand des in der Abbildung dargestellten Fließschemas erläutert werden.

Das bei der direkten Wasserwäsche des Rohgases anfallende Abwasser weist entsprechend dem angewandten Vergasungsdruck einen Druck zwischen 25 und 100 bar auf und gelangt mit diesem Druck über die Leitung 1 in die Druckentspannung 2, in der der Druck des Abwassers bis auf einen Wert von 4 bis 10 bar teilentspannt wird. Hierbei entweichen über die Leitung 6 die physikalisch gelösten Gase, wie auch ein Teil des gelösten $NH_3$, $H_2S$, $CO_2$ und HCN. über die Leitung 3 gelangt das teilentspannte Abwasser in den Druckfilter 4, in dem die in ihm enthaltenen Feststoffe (Flugstaub) abgeschieden und über die Leitung 5 abgezogen werden. Gleichzeitig erfolgt während der Druckfiltration eine weitere Entspannung des Abwassers bis auf einen Wert von 1,1 bis 1,8 bar, vorzugsweise 1,3 bis 1,5 bar. Die Brüden aus der Druckentspannung 2 und dem Druckfilter 4 werden über die Leitungen 6 und 7 der Claus-Anlage 8 zugeführt. Das von den Feststoffen befreite und auf den vorstehend genannten Druck entspannte Abwasser wird über die Leitung 9 auf den Kopf der Kolonne 10 gegeben, in deren Oberteil der mit Einbauten versehene Dampfstripper 11 untergebracht ist. Wenn das Abwasser in der Leitung 9 hierbei einen $p_H$-Wert von über 7 aufweist, so wird durch die Leitung 12 eine starke Säure zudosiert, bis ein $p_H$-Wert von ≦ 7 erreicht ist. In der Regel weist das Abwasser in der Leitung 9 ohnehin diesen $p_H$-Wert auf, so da eine Zugabe von Säure nicht erforderlich ist. Falls dies jedoch der Fall sein sollte, so ist davon auszugehen, daß auf Grund der erfindungsgemäßen Reaktionsführung für die Einstellung des $p_H$-Wertes nur eine sehr geringe Säuremenge erforderlich ist, so daß die dadurch verursachte Salzbeladung des Abwassers ebenfalls sehr klein ist. Im Dampfstripper 11 werden durch im Gegenstrom geführten Wasserdampf die Sauergase $H_2S$, HCN und $CO_2$ nahezu vollständig und das $NH_3$ zum Teil abgetrieben. Die dabei anfallenden Brüden werden über die Leitung 13 abgezogen und gelangen anschließend über die Leitung 6 ebenfalls in die Claus-Anlage 8. Der erforderliche Wasserdampf wird im Umlaufkocher 14 erzeugt. Zu diesem Zweck wird ein Teil der sich auf dem Boden 15 befindlichen Flüssigkeit über die Leitung 16 abgezogen, danach im Umlaufkocher 14 verdampft und der anfallende Wasserdampf über die Leitung 17 von unten in den Dampfstripper 11 eingeleitet.

Das aus dem Dampfstripper 11 ablaufende und sich auf dem Boden 15 sammelnde Abwasser enthält neben $NH_4$ -Ionen und anderen Schadstoffen auch komplex gebundenes Cyanid, insbesondere Hexacyanoferrit, das sich der Dampfstrippung weitgehend entzieht. Der Gehalt an komplexem Cyanid, das im Waschsystem durch Reaktion von Cyanid mit $Fe^{2+}$-Ionen aus der Kohleasche und/oder der Behälterwand entsteht, ist in der Regel zu hoch, um das Abwasser an eine kommunale Kläranlage abgeben zu können. Auch der chemische Sauerstoffbedarf ist meist zur Einleitung in ein Oberflächengewässer zu hoch. Erfindungsgemäß wird deshalb das Abwasser vom Boden 15 über die Leitung 18 abgezogen und gelangt zunächst in die Pumpe 19, in der es auf den für die nachfolgende Druckoxidation erforderlichen Druck von 1,5 bis 15 bar gebracht wird. Anschließend wird das Abwasser über die Leitung 20 nach Passieren des Wärmetauschers 21 auf den Kopf des Druckreaktors 22 aufgegeben. Im Wärmetauscher 21 wird das Abwasser dabei im indirekten Wärmeaustausch mit dem aus dem Sumpf der Kolonne 10 ablaufenden Abwasser auf die für die Druckoxidation erforderliche Reaktionstemperatur aufgeheizt. Falls dieser indirekte Wärmeaustausch für die erforderliche Aufheizung noch nicht ausreichend ist, kann im Verlauf der Leitung 20 eine weitere Erhitzungsmöglichkeit vorgesehen sein. Das Abwasser wird dem Druckreaktor 22 entweder mit dem $p_H$-Wert zugefürt, den es beim Abzug vom Boden 15 aufweist, oder es wird bereits vor dem Eintritt in den Druckreaktor 22 durch Zugabe einer starken Base auf einen $p_H$-Wert von 9 oder öher gebracht. Im Druckreaktor 22 erfolgt die Druckoxidation des Abwassers bei einer Temperatur zwischen 110 und 170°C, vorzugsweise 140 und 160°C, sowie einer Verweilzeit zwischen 2 und 8 Stunden, vorzugsweise zwischen 3 und 7 Stunden. Das erforderliche Oxidationsmittel wird dabei über die Leitung 23 in den Unterteil des Druckreaktors 22, der mit Einbauten versehen sein kann, eingeleitet. Das Abwasser wird deshalb im Gegenstrom zum Oxidationsmittel durch den Druckreaktor 22 geführt. In der Regel steht als Oxidationsmittel neben Luft vor allem Sauerstoff aus der zur Vergasungsanlage gehörenden Luftzerlegungsanlage preisgünstig zur Verfügung. Eine Sauerstoffzufuhr von außen in den Druckreaktor 22 ist außerdem für den Cyanidabbau nicht in jedem Falle unbedingt erforderlich. Die Sauerstoffzufuhr bewirkt jedoch eine Beschleunigung des Cyanidabbaus sowie einen effektiven Abbau der Schwefelsauerstoffverbindungen. Erhöhte Abbaugeschwindigkeiten können mit ozonhaltiger Luft bzw. ozonhaltigem Sauerstoff erzielt werden.

Bei den im Druckreaktor 22 herrschenden Reaktionsbedingungen wird komplexes Cyanid hydrolytisch zu

Ammoniumformiat umgesetzt, z.B. nach

$$Fe(CN)_b^{4-} \rightleftharpoons Fe^{2+} + b\ CN^- \qquad (1)$$

$$b\ CN^- + 12\ H_2O \rightarrow b\ NH_3 + b\ HCOO^- \qquad (2)$$

$$b\ NH_3 + b\ H^+ \rightleftharpoons b\ NH_4^+ \qquad (3)$$

Während die Reaktionen (1) und (3) Gleichgewichte darstellen, verläuft die Cyanidhydrolyse (2) unter den gewählten Reaktionsbedingungen nur in die angegebene Richtung. Das nach Reaktion (1) erzeugte freie Cyanid wird kontinuierlich zerstört, so daß eine vollständige Umsetzung des komplexen Cyanids erreicht werden kann.

$NH_3$ und $NH_4$-Ionen werden durch das Oxidationsmittel chemisch nicht angegriffen, wohl aber durch das im Gegenstrom zum Abwasser durch den Druckreaktor 22 strömende Oxidationsmittel teilweise gestrippt. Die über Kopf aus dem Druckreaktor 22 austretenden Brüden werden deshalb über die Leitung 24 auf den Dampfstripper 25 aufgegeben, der der Ammoniakabtreibung dient. Da bei der Cyanidhydrolyse im Druckreaktor 22 ebenfalls $NH_3$ entsteht, wird die Ammoniakabtreibung dem Druckreaktor 22 nachgeschaltet. Das aus dem Druckreaktor 22 ablaufende Abwasser wird deshalb über die Leitung 26 auch auf den Dampfstripper 25 gegeben. Da der Ammoniakabtrieb im Dampfstripper 25 erfindungsgemäß bei einem $p_H$-Wert von 9 oder höher durchgeführt wird, muß dem Abwasser vor dem Eintritt in den Dampfstripper 25 zwecks Einstellung des $p_H$-Wertes eine starke Base zugesetzt werden. Dies kann entweder vor oder hinter dem Druckreaktor 22 geschehen. Hierfür ist jedoch in jedem Falle nur eine sehr geringe Menge einer starken Base erforderlich, so daß die dadurch verursachte Salzbeladung des Abwassers ebenfalls sehr klein ist. Die ammoniakalischen Brüden des Dampfstrippers 25 können über die Leitung 27 ebenfalls in die Claus-Anlage 8 eingeleitet werden, wo das $NH_3$ und HCN in einer speziellen katalytischen Stufe zu Strickstoff zersetzt werden. In Ausnahmefällen, z.B. in Anlagen mit sehr großer Durchsatzleistung, kann man die über die Leitung 27 abgezogenen Brüden auch kondensieren und das dabei entstehende Ammoniakwasser zur Erzeugung von $NH_3$-Starkwasser verwenden.

Das aus dem Dampfstripper 25 ablaufende Abwasser wird durch die Leitung 28 abgezogen und im Wärmetauscher 21 gekühlt. Nachdem überschüssige Base im Abwasser durch Zugabe von Säure neutralisiert worden ist, kann dasselbe gegebenenfalls nach weiterer Kühlung über die Leitung 32 aus dem Prozeß entfernt werden. Der im Dampfstripper 25 benötigte Wasserdampf wird im Umlaufkocher 29 erzeugt. Hierzu wird ein Teil des Abwassers vom Boden der Kolonne 10 über die Leitung 30 abgezogen und in den Umlaufkocher 29 eingeleitet. Der dort erzeugte Wasserdampf wird über die Leitung 31 in die Kolonne 10 zurückgeführt.

Selbstverständlich zeigt das in der Abbildung dargestellte Fließschema nur die zur Erläuterung des erfindungsgemäßen Verfahrens unbedingt notwendigen Anlagenteile, während alle übrigen Anlagenteile, wie z.B. Pumpen, Wärmetauscher, Ventile, Meß- und Regeleinrichtungen, nicht dargestellt sind. In Abweichung von der im Fließschema wiedergegebenen Ausführungsform können die Dampfstripper 11 und 25 statt in einer gemeinsamen Kolonne 10 auch in getrennten Kolonnen untergebracht werden. Die Claus-Anlage 8 dient der Durchführung des sogen. Claus-Prozesses, d.h. der Umsetzung von $H_2S$ und anderen Schwefelverbindungen zu Elementarschwefel.

Abschließend soll die Wirksamkeit des erfindungsgemäßen Verfahrens an Hand eines Ausführungsbeispieles belegt werden, das die Aufarbeitung eines Abwassers betrifft, das bei der direkten Wasserwäsche von durch Flugstromvergasung von Steinkohle unter erhöhtem Druck gewonnenem Rohgas anfällt. Die hierbei auftretenden Betriebsbedingungen und Analysenergebnisse sind in der nachfolgenden Tabelle zusammengefaßt. Die Numerierungen in der Tabelle beziehen sich dabei auf die Bezugszeichen der Abbildung.

| Strom Nr. | 9 | 20 | 26 | 32 |
|---|---|---|---|---|
| Temperatur, °C | 100 | 150 | 105 | 20 |
| Druck bar | 1,2 | 10 | 1,2 | 1,0 |
| pH | 6,8 | 12,0 | 12,0 | 7,0 |
| Analyse, mg/l | | | | |
| $NH_4^+$ | 630 | 220 | 170 | 6 |
| $S^{2-}$ | 740 | 3 | 0,1 | 0,1 |
| $S_2O_3^{2-}$ | 10 | 8 | 1 | 1 |
| $CN^-_{leicht\ freisetzbar}$ | 30 | 2 | 0,1 | 0,1 |
| $CN^-_{gesamt}$ | 150 | 110 | 3 | 3 |
| $CNS^-$ | 30 | 32 | 25 | 23 |
| $HCOO^-$ | 130 | 120 | 7 | 7 |
| CSB, mg $O_2$/l | 2040 | 460 | 91 | 82 |

## Patentansprüche

1. Verfahren zur Aufarbeitung des Abwassers, das bei der direkten Wasserwäsche des durch Vergasung fester, flüssiger und/oder gasförmiger Brennstoffe unter erhöhtem Druck gewonnenen Rohgases anfällt, unter Anwendung einer Oxidationsbehandlung mit Luft und/oder Sauerstoff sowie einer Filtration zur Abscheidung der im Abwasser enthaltenen Feststoffe, **dadurch gekennzeichnet,** daß die folgenden Verfahrensstufen in der angegebenen Reihenfolge angewendet werden:
   a) Entspannung des anfallenden, aus dem Kreislauf der direkten Wasserwäsche abgezogenen Abwassers vom Vergasungsdruck bis auf einen Druck von 4 bis 10 bar,
   b) Druckfiltration des teilentspannten Abwassers und gleichzeitiger Entspannung desselben bis auf einen Druck von 1,1 bis 1,8 bar,
   c) Dampfstrippung der flüchtigen sauren Komponenten des Abwassers bei einen $p_H$-Wert des Abwassers von $\leqq 7$
   d) Druckoxidation bei einem Druck von 1,5 bis 15 bar und einer Temperatur zwischen 110 und 170°C sowie einer Verweilzeit des Abwassers im Reaktor von 2 bis 8 Stunden
   und
   e) Dampfstrippung des im Abwasser vorhandenen Ammoniaks bei einem $p_H$-Wert des Abwassers von $\geqq 9$.

2. Verfahren nach Anspruch 1, **dadurch gekennzeichnet,** daß die Druckoxidation (Verfahrensstufe d) vorzugsweise bei einem Druck von 5 bis 15 bar und einer Temperatur von 140 bis 160°C sowie einer Verweilzeit des Abwassers im Reaktor von 3 bis 7 Stunden durchgeführt wird.

3. Verfahren nach den Ansprüchen 1 und 2, **dadurch gekennzeichnet,** daß die Dampfstrippungen (Verfahrensstufen c und e) vorzugsweise bei einem Druck von 1,2 bis 1,5 bar durchgeführt werden.

4. Verfahren nach den Ansprüchen 1 bis 3, **dadurch gekennzeichnet,** daß zur Beschleunigung der Druckoxidation (Verfahrensstufe d) Ozon verwendet wird.

5. Verfahren nach den Ansprüchen 1 bis 4, **dadurch gekennzeichnet,** daß die Druckoxidation ohne Zufuhr eines Oxidationsmittels von außen durchgeführt wird.

6. Verfahren nach den Ansprüchen 1 bis 6, **dadurch gekennzeichnet,** daß alle im Prozeß anfallenden Brüden einer Claus-Anlage zugeführt werden, die mit einem Katalysator zur Zersetzung von Ammoniak und HCN bestückt ist.

7. Verfahren nach den Ansprüchen 1 bis 5, **dadurch gekennzeichnet,** daß nur die in den Verfahrensstufen a, b und c anfallenden Brüden der Claus-Anlage zugeführt werden, während die Brüden aus der Verfahrensstufe e kondensiert und zu $NH_3$-Starkwasser aufgearbeitet werden.

## Claims

1. Process for treating the effluent arising in the direct water scrubbing of the crude gas obtained by gasification of solid, liquid and/or gaseous fuels under elevated-pressure, using an oxidation treatment with air and/or oxygen and a filtration for separating off the solids contained in the effluent, characterised in that the following process stages are applied in the indicated order:
   a) depressurisation of the effluent arising, taken off from the circulation of the direct water scrubbing, from the gasification pressure down to a pressure of 4 to 10 bar,
   b) pressure filtration of the partially depressurised effluent and simultaneous depressurisation thereof down to a pressure from 1.1 to 1.8 bar,
   c) steam-stripping of the volatile acidic components of the effluent at a pH of the effluent of $\leqq 7$,
   d) pressure oxidation at a pressure from 1.5 to 15 bar and at a temperature between 110 and 170°C with a residence time of the effluent in the reactor from 2 to 8 hours
   and
   e) steam-stripping of the ammonia present in the effluent at a pH of the effluent of $\geqq 9$.

2. Process according to Claim 1, characterised in that the pressure oxidation (process stage d) is preferably carried out at a pressure from 5 to 15 bar and at a temperature from 140 to 160°C with a residence time of the effluent in the reactor of 3 to 7 hours.

3. Process according to Claims 1 and 2, characterised in that the steam-strippings (process stages c and e) are preferably carried out at a pressure from 1.2 to 1.5 bar.

4. Process according to Claims 1 to 3, characterised in that ozone is used in order to accelerate the pressure oxidation (process stage d).

5. Process according to Claims 1 to 4, characterised in that the pressure oxidation is carried out without external supply of an oxidising agent.

6. Process according to Claims 1 to 5, characterised in that all vapours arising in the process are fed to a Claus plant, which is charged with a catalyst for the decomposition of ammonia and HCN.

7. Process according to Claims 1 to 5, characterised in that only the vapours arising in process stages a, b and c are fed to the Claus plant, whereas the vapours from process stage e are condensed and processed to give rich aqueous $NH_3$.

## Revendications

1. Procédé de retraitement de l'eau usée qui se forme lors du lavage à l'eau direct du gaz brut produit par gazéification sous pression élevée de combustibles solides, liquides et/ou gazeux, avec exécution d'un traitement d'oxydation au moyen d'air et/ou d'oxygène ainsi que d'une filtration pour la séparation des solides contenus dans l'eau usée, caractérisé en ce que les stades opératoires suivants sont exécutés dans l'ordre de succession indiqué :

a) détente de l'eau usée formée soutirée du circuit du lavage à l'eau direct, depuis la pression de gazéification jusqu'à une pression de 4 à 10 bars,
b) filtration sous pression de l'eau usée partiellement détendue et détente simultanée de celle-ci jusqu'à une pression de 1,1 à 1,8 bar,
c) entraînement à la vapeur des composants acides volatils de l'eau usée pour un pH de l'eau usée $\leqq$ 7,
d) oxydation sous pression à une température entre 110 et 170°C sous une pression de 1,5 à 15 bars avec un temps de séjour de l'eau usée dans le réacteur de 2 à 8 heures, et
e) entraînement à la vapeur de l'ammoniac contenu dans l'eau usée pour un pH de l'eau usée $\geqq$ 9.

**2.** Procédé suivant la revendication 1, caractérisé en ce que l'oxydation sous pression (stade opératoire d) est exécutée de préférence sous une pression de 5 à 15 bars et à une température de 140 à 160°C avec un temps de séjour de l'eau usée dans le réacteur de 3 à 7 heures.

**3.** Procédé suivant les revendications 1 et 2, caractérisé en ce que les entraînements à la vapeur (stades opératoires c et e) sont exécutés de préférence sous une pression de 1,2 à 1,5 bars.

**4.** Procédé suivant les revendications 1 à 3, caractérisé en ce que de l'ozone est utilisé pour l'accélération de l'oxydation sous pression (stade opératoire d).

**5.** Procédé suivant les revendications 1 à 4, caractérisé en ce que l'oxydation sous pression est exécutée sans apport d'agent oxydant de l'extérieur.

**6.** Procédé suivant les revendications 1 à 5, caractérisé en ce que toutes les vapeurs formées dans le procédé sont transférées à une installation Claus qui est équipée d'un catalyseur pour la décomposition de l'ammoniac et du HCN.

**7.** Procédé suivant les revendications 1 à 5, caractérisé en ce que seules les vapeurs formées aux stades opératoires a, b et c sont transférées dans l'installation Claus, tandis que les vapeurs provenant du stade opératoire e sont condensées et retraitées en eau ammoniacale forte.

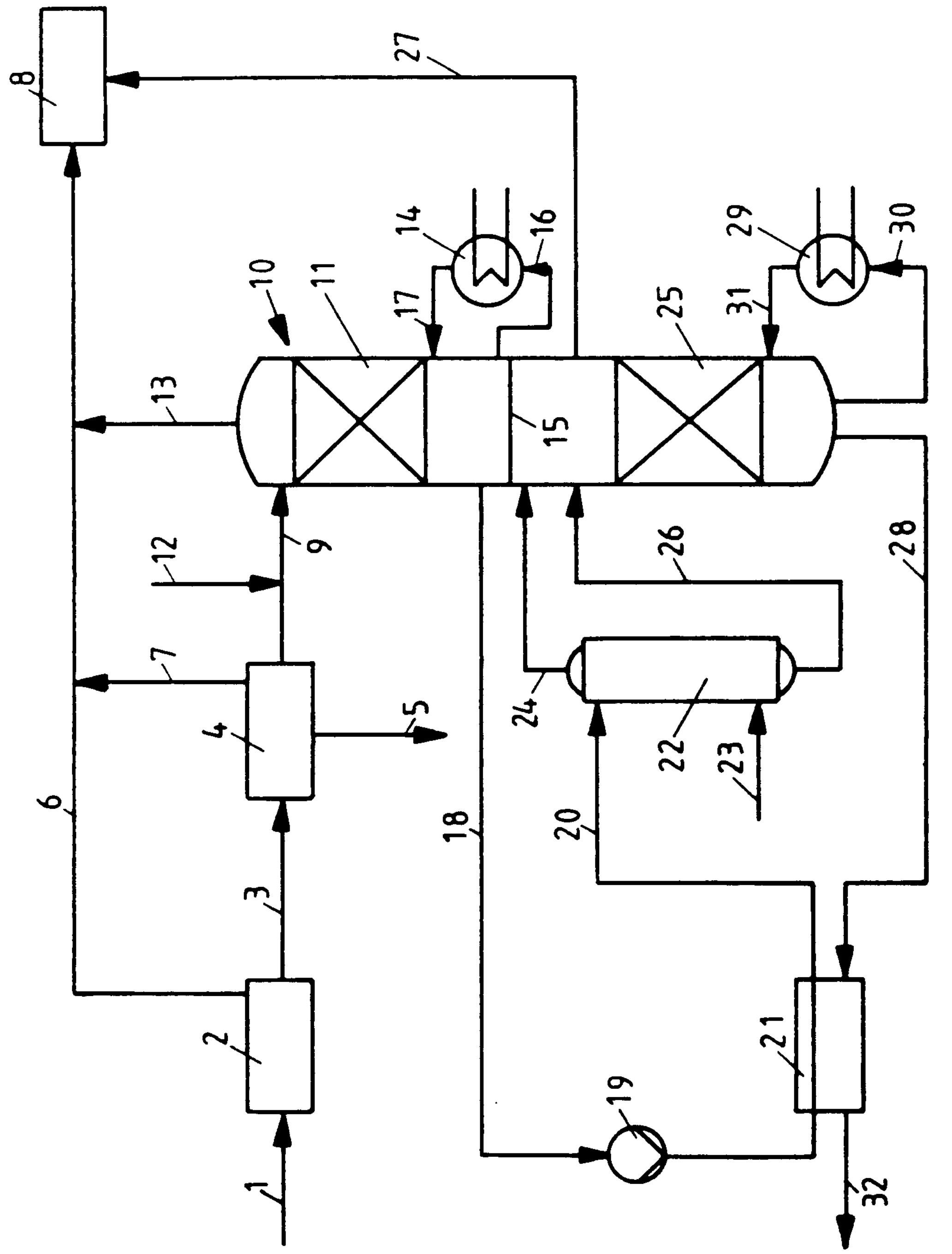
1
2
3
4
5
6
7
8
9
10
11
12
13
14
15
16
17
18
19
20
21
22
23
24
25
26
27
28
29
30
31
32